# NOUVEAU FASCICULE DE BREVET EUROPEEN

(11) **EP 0 626 664 B2**
(45) Date de publication et mention de la décision concernant l'opposition: **24.05.2006**
(45) Mention de la délivrance du brevet: 18.09.1996
(21) Numéro de dépôt: 94400900.0
(22) Date de dépôt: 26.04.1994
(51) Int. Cl.: G07F 7/10, G06F 9/44, H04M 17/00

(54) **Système de communication avec cartes à puce**
IC-Karten-Übertragungssystem
Communication system using IC cards

(30) Priorité: 28.04.1993 FR 9305023
(43) Date de publication de la demande: 30.11.1994
(60) Demande divisionnaire: 05109978.6
(73) Titulaire: GEMPLUS, 13881 Gémenos Cédex (FR)
(72) Inventeur: Martineau, Philippe, Cabinet BALLOT-SCHMIT, F-75116 Paris (FR)

(56) Documents cités:
- EP-A- 0 292 248
- EP-A- 0 562 890
- WO-A-87/07060
- DE-A- 3 743 639
- GB-A- 2 173 623
- GB-A- 2 227 584
- US-A- 5 038 025
- US-A- 5 046 082
- FUNKSCHAU, no.5, 24 Février 1989, GERMANY pages 54 - 58 VON PETER H. GRAF 'karten mit köpfchen'
- ECHO DES RECHERCHES, no.139, 1990, ISSY/MOLINEAUX, FR pages 13 - 20, XP386290 P.JOLIE ET AL. 'Une application de la carte à microprocesseur: le module d'identité d'abonné du radiotéléphone numérique européen'
- Duden "Informatik", Bibliographisches Institut Mannheim 1988, S. 18

## Description

La présente invention à pour objet un système de communication entre un centre serveur et un utilisateur par l'intermédiaire d'une interface. Elle vise particulièrement les domaines ou le fonctionnement de l'interface est conditionné par la présence d'un micro-circuit électronique de type jeton, support à puce, carte à puce ou autre, inséré temporairement de manière amovible ou définitivement dans l'interface. On trouve des utilisations de ce type de système avec des téléphones portables laissés à disposition et pour lesquels on veut, par exemple, empêcher l'utilisation du téléphone par quelqu'un qui n'aurait pas inséré de circuit correspondant Elle concerne également tous les terminaux de paiement direct utilisant des cartes à puce notamment pour provoquer des retraits sur des comptes en banque.

Le problème qu'on rencontre avec ce type de systèmes est lié à la definition de l'interface. En effet a un moment donné, les besoins connus de securité et ou de confort de transaction impliquent la mise en oeuvre de procédures par l'interface. Ces procédures sont évolutives. Ceci présente comme conséquence ou inconvénient que des interfaces obsoletes doivent alors être changées au fur et à mesure de cette évolution.

Il pourrait néanmoins être envisagé de mettre à jour les systèmes d'exploitation des interfaces d'une manière similaire à la mise à jour des systèmes d'exploitation dans les micro-ordinateurs. Cependant, cette façon de faire présente l'inconvénient que beaucoup de mises à jour devraient être faites. De plus, le propriétaire, ou le gérant, de l'interface n'est pas l'utilisateur de cette interface celui qui possède le circuit électronique d'autorisation en question. Par exemple, pour un terminal de paiement par carte à puce dans un restaurant, le propriétaire de l'interface est le restaurateur alors que l'utitisateur, le payeur, est le titulaire de la carte à puce. Il en est de même avec les systèmes de téléphone portable, notamment dans le domaine des voitures de location où le téléphone, portable (donc l'interface) appartient à la société de location de voitures (ou à une société concessionnaire d'un réseau de télécommunications) et où la carte à puce ou le circuit électronique concerné est la propriété de l'utilisateur. Dans ce cas, une différence de mise à jour, d'une interface à une autre peut rendre pour un utilisateur, l'utilisation très compliquée.

Il y a un nécessaire décalage entre le souci de l'utilisateur qui est intéressé à disposer avec sa carte à puce des tous derniers perfectionnements, et le souci du gestionnaire de l'interface qui, pour des raisons de coût peut être tenté de limiter le nombre de campagnes de mise à jour des interfaces qu'il gère.

Un exemple pratique de besoin est celui ressenti dans le domaine des téléphones portatifs où le gestionnaire de l'interface, ou bien le propriétaire du serveur, voudrait pouvoir décompter des unités prépayées dans des cartes à puce d'utilisateur, un peu à la manière de ce qui se pratique dans les téléphones publics. Or, les appareils téléphoniques portatifs actuels, les interfaces ne sont pas munis dans leur système d'exploitation d'un jeu d'instructions permettant ce décomptage. Ce sera le cas plus tard. Le problème à résoudre dans ce cas particulier est donc de décompter dans la carte à puce, avec une interface qui n'est pas munie de moyens pour cela, des impulsions de décomptage qui seraient envoyées par un serveur téléphonique. On voit bien la difficulté du problème.

Le document EP-A- 0 292 248 décrit un système pour télécharger des instructions dans une carte à puce Le document, "L'écho des recherches" n°139 1990 pages 13-20, X P 386 290, dû à P. Jolie et Al, décrit l'utilisation d'une carte à puce dans un radiotéléphone. Aucun de ces enseignements n'est toutefois utilisable pour provoquer, au cours d'une session de connexion, l'exécution d'une instruction qui n'est pas déjà disponible dans l'interface ou la carte à puce.

L'invention a pour objet de trouver une solution à ce problème et de proposer une beaucoup plus grande souplesse d'utilisation des interfaces ou terminaux d'utilisation. Plusieurs solutions sont envisageables, on pourrait notamment définir un mécanisme "universel" permettant de gérer les terminaux de manière transparente depuis le serveur. Il faudrait pour cela équiper tous les terminaux existant de ce nouveau mécanisme. C'est donc une solution peu réaliste. La solution envisagée dans l'invention ne requiert aucune modification du terminal, et ne fait qu'exploiter les ressources déjà disponibles de celui-ci. Ces ressources sont soit des procédures disponibles depuis le serveur, soit des instructions cartes (embarquées dans le terminal) commandées depuis le serveur, qui permettent d'acheminer des données à travers le terminal jusque dans la carte. En outre, selon l'invention, ces terminaux vont eux-mêmes avoir un système d'exploitation des plus simples et qui en définitive n'aura même pas besoin d'evoluer.

L'idée de l'invention est d'utiliser dans le système d'exploitation des interfaces, parmi le jeu d'instructions existant, un jeu minimum d'instructions ou même une procédure existante. Avec ce jeu ou cette procédure on provoque le pointage, dans une zone réservée de la mémoire de la puce, d'une instruction d'un jeu complémentaire, ou jeu étendu. Cette instruction complémentaire est alors exécutée, soit par le microprocesseur de la carte à puce, soit par le microprocesseur de l'interface, ces derniers agissant sur des périphériques désignés, Ils provoquent par exemple un affichage d'informations sur un écran de l'interface, un décomptage d'unités prépayées dans une mémoire de la carte à puce, un envoi au serveur d'un bilan relatif à la carte à puce et/ou la communication en cours (notamment dans un but d'établir des facturations de durées de transmission), ou une invalidation de la carte à puce, etc...

Avec l'existence d'une zone réservée, dont la place et ensuite l'utilisation sont connues, on peut ainsi charger, avec le jeu minimum d'instructions du système d'exploitation de l'interface, les caractéristiques d'une instruction. Les caractéristiques de cette instruction sont soit le code instruction de cette instruction elle-même, soit une adresse de cette instruction dans une mémoire de la puce. En plus de cette zone réservée, le microprocesseur de la carte à puce comporte un automatisme d'exécution de l'instruction dont les caractéristiques ont été chargées dans la zone réservée. Dès qu'on veut augmenter la puissance d'utilisation d'un système, on envoie à la carte à puce les caracteristiques de l'instruction à exécuter à partir du serveur. Elles sont transmises naturellement par l'interface qui en pratique sachant selectionner, et écrire (c'est un minimum) une zone mémoire dans la mémoire de la carte à puce peut y inscrire les caractéristiques de cette instruction. Par la suite le microprocesseur de la carte à puce prend le relais pour provoquer, avec son automatisme, l'exécution de cette instruction.

Dans un perfectionnement, plutôt que d'envoyer l'instruction à partir du serveur, on chargera des instructions supplémentaires dans des cartes à puce mises à jour, en des jeux complémentaires d'instructions. Dans ce cas, les caractéristiques d'instruction à envoyer par le serveur ne consistent qu'en un pointeur, désignant celle de ces instructions complémentaires qu'on veut voir faire exécuter.

En variante on utilise une procédure existante de gestion de la carte qui est associée à l'envoi d'une donnée. On particularise une donnée, et, en réception dans la carte, on vérifie que la donnée transmise a cette forme particulière. Le cas échéant on exécute une instruction du jeu étendu qui correspond alors à cette donnée particulière.

L'invention a donc pour objet un système de communication comportant
- un centre serveur, une puce électronique portée par un support à puce, et une interface de communication entre ce centre serveur, cette puce, et, éventuellement, un utilisateur,
- dans l'interface, un microprocesseur et une mémoire programme munie d'un jeu limité d'instructions ou de procédures de communication avec la puce, et,
- dans la puce, un microprocesseur et une mémoire programme munie également d'un jeu limité correspondant d'instructions ou de procédures,
caractérisé en ce que le système de communication comporte
- des moyens agencés pour, à partir d'un message émis par le centre serveur, au cours d'une session d'utilisation, sélectionner ou écrire, dans une zone mémoire réservée de la puce, avec les jeux limités d'instructions ou les procédures de l'interface, les caractéristiques d'une instruction différente de celles des jeux limités ou procédures, et de cette interface
- dans la puce un automatisme d'exécution agencé pour, au cours de cette session, exécuter cette instruction différente après sélection ou écriture de ses caractéristiques dans cette zone mémoire réservée.

L'invention sera mieux comprise à la lecture de la description qui suit et à l'examen des figures qui l'accompagnent. Celles-ci ne sont données qu'à titre indicatif et nullement limitatif de l'invention. Les figures montrent:
- Figure 1 : une représentation globale d'un système de communication conforme à l'invention;
- Figure 2: une représentation schématique du fonctionnement de l'automatisme d'exécution de l'instruction du jeu complémentaire;
- Figure 3: des microprogrammes types mis en oeuvre dans une carte a puce fonctionnant avec le système de communication de l'invention.

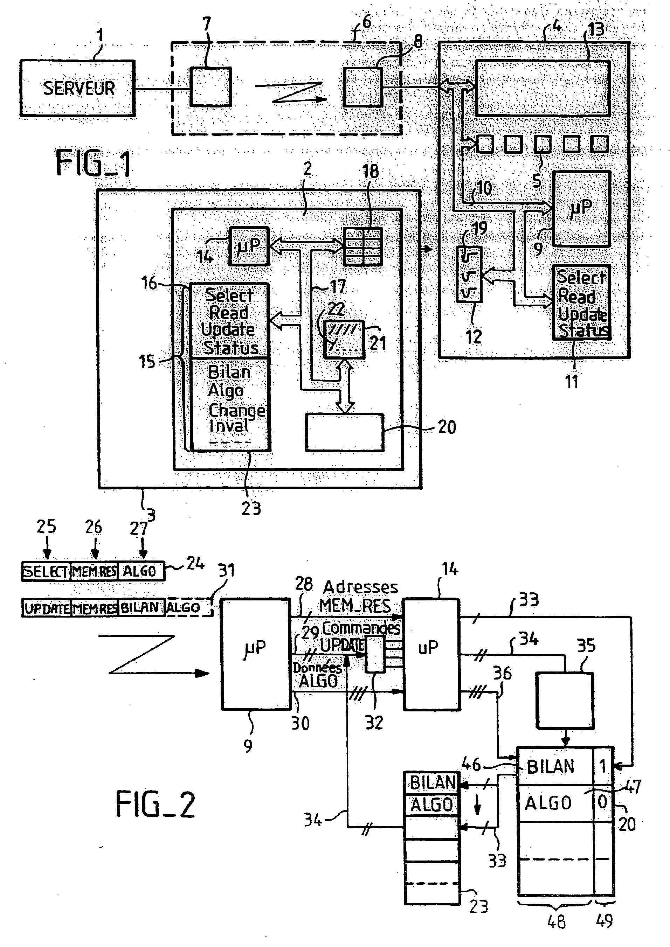

La figure 1 représente un système de communication conforme à l'invention comportant un centre serveur 1, une puce électronique 2 portée par exemple par un support à puce 3, par exemple une carte à puce, ou un jeton à puce, ou autre, notamment un support de connexion d'un circuit intégré monté dans son boîtier DIP ou CMS. Ce système comporte également une interface de communication 4 entre ce centre serveur 1, cette puce 2 et, éventuellement, un utilisateur qui peut manipuler des boutons de commande 5 de l'interface 4. Le serveur 1 est le système qui héberge l'application et qui la met à la disposition des nombreuses interfaces et utilisateurs. Le serveur 1 envoie des informations aux interfaces ainsi qu'à la carte par l'intermédiaire d'une liaison de transport 6. II peut cependant y avoir une connection directe. La liaison de transport 6 peut également être un chemin dans un réseau de transmission de données, et avoir plusieurs formes : filaires, hertziennes ou autres. Elle utilise un protocole de transport et notamment des modems 7 et 8 pour acheminer des informations. Ces informations représentent des données, des adresses, et/ou des instructions.

L'interface 4 peut être dédiée à une application, par exemple du type EFTPOS (Electronic Found Transfert Point Of Sale) ou standard, par exemple du type ordinateur personnel ou Minitel. Le rôle de l'interface consiste essentiellement à permettre à un utilisateur de dialoguer avec le serveur 1, ou la puce 2 et/ou à acheminer et mettre en formé des informations destinées au serveur 1, à la puce 2 ou à l'interface 4. La carte à puce 3 comporte des données propres à l'application et propres au porteur: l'utilisateur. Elle dispose d'un système d'exploitation qui offre une panoplie de fonctions grâce à un jeu d'instructions, la plupart du temps spécifiques.

Dans l'interface 4 est installé un microprocesseur 9 en relation par un bus 10, de commandes, de données et d'adresses, avec essentiellement une mémoire programme 11, un lecteur de support à puce 12 et un circuit d'entrée/sortie à direction du serveur 1, par exemple le modem 8. Dans cette version minimale, l'interface 4 ne sert qu'à assurer le trafic avec la carte à puce 3. Au besoin, le bus 10 est également connecté à un écran d'affichage 13 permettant de visualiser les opérations effectuées. De préférence, le bus 10 est également relié à des boutons de commande 5 permettant l'intervention d'un utilisateur. Dans ce cas, l'interface est une interface entre l'opérateur et la carte à puce ou entre le serveur, l'opérateur et la carte à puce. La memoire programme 11 comporte un jeu limité d'instructions, ici les instructions SELECT, READ, UPDATE, STATUS, qui sont peu nombreuses. En pratique, seules sont essentielles les instructions SELECT et UPDATE permettant respectivement de sélectionner une zone mémoire de la mémoire de la puce de la carte à puce et/ou d'y écrire quelque chose. Cependant pour des raisons de confort ce jeu limité comportera également une instruction de lecture seule, READ, d'une zone de la carte à puce et, de préférence mais éventuellement, une instruction STATUS permettant d'envoyer un état des compteurs ou registres internes de la carte à puce au serveur et/ou de les visualiser sur l'écran 13. Le contenu de cette instruction reste à définir. Elle pourrait être aussi une instruction Jocker.

La puce 2 de la carte 3 comporte un microprocesseur 14 et une mémoire programme 15 comportant au moins un jeu limité d'instructions 16. Le jeu 16 correspond au jeu 11 on y retrouve les mêmes instructions que dans ce dernier, c'est-à-dire les instructions SELECT, READ, UPDATE et STATUS. Ici egalement seules les instructions SELECT et UPDATE sont essentielles pour mettre en oeuvre l'invention. On notera que les jeux limités 11 et 16 peuvent être un peu plus complets que ces jeux minimaux. La puce 2 comporte également un bus 17, du même type que le bus 10 mettant en relation le microprocesseur 14 la mémoire programme 15 et un dispositif d'entrée/sortie 18. Dans le cas des cartes à puce, ce dispositif 18 d'entrée/sortie comporte un connecteur normalisé dont les plages métalliques sont destinées à venir au contact de palpeurs 19 du lecteur 12.

Une des caractéristiques essentielles de l'invention est que la puce 2 comporte une zone mémoire réservée 20 en relation par le bus 17 avec le microprocesseur 14. Dans cette zone réservée 20, le serveur 1 provoque l'écriture de caractéristiques d'une instruction différente de celle des jeux limités 11 et 16. Il provoque, par exemple une écriture des caractéristiques d'une instruction de BILAN (différente de STATUS) à faire envoyer par le microprocesseur 14, sur l'écran 13, un état du solde des unités prépayées et contenues dans une mémoire annexe 21 de la carte. Cette instruction différente complémentaire peut également être une instruction ALGO tendant à faire exécuter par le microprocesseur 14 un algorithme de chiffrement de message ou d'authentification de la carte 3 à puce ou du terminal 4. Cette instruction différente peut également être une instruction CHANGE de changement de valeur des unités prépayées, afin d'oblitérer certaines unités 22, au fur et à mesure de la durée de la communication. Elle peut également être une instruction INVAL d'invalidation de la carte, ou tout autre instruction dont le besoin se fera sentir petit à petit, au fur et à mesure des évolutions des applications elles-mêmes.

Plutôt que de stocker dans la zone 20 de la mémoire réservée des caractéristiques d'une instruction différente de celle du jeu limité, on stocke dans la zone 20 une adresse relative au stockage, dans une partie complémentaire 23 de la mémoire programme 15 (ou d'une autre mémoire de la puce 2), d'une instruction d'un jeu complémentaire. Ce mode est préféré puisqu'il suffit de faire envoyer par le serveur 1 uniquement l'adresse, dans la partie compleméntaire 23 de la mémoire programme 15, des instructions à éxecuter différentes. BILAN, ALGO, CHANGE, INVAL, .. C'ést plus court. La figure 2 montre le fonctionnement de l'automatisme préféré d'exécution de l'instruction différente à l'issue de sa selection ou de son écriture. Dans cette figure, les mêmes éléments sont désignés par les mêmes références que dans la figure 1. L'intérêt de l'invention se situe en particulier dans le cas où on veut faire exécuter par le couple interface 4 puce 2 une instruction qui ne figure pas déjà dans le jeu limité d'instructions 11 ou 16. Dans la description qui va suivre on ne tiendra pas compte du caractère série ou parallèle de la transmission des diverses informations. En effet les adaptations nécessaires sont efféctueés par le MODEM 8 d'une part, et, pour les protocoles connus de gestion des mémoires de carte à puce, par les lecteurs 12, d'autre part.

Un message 24 est émis par le serveur 1. Il comporte en substance une première partie 25 relative à un code instruction, une deuxième partie 26 relative à une zone mémoire désignée (celle sur laquelle porte l'instruction), et une partie 27 relative à une donnée. La partie 27 peut être de longueur fixe ou variable et, dans ce cas, d'une manière connue elle comporte en en-tête, en mode binaire, un octet indiquant la longueur de l'information transmise.

Dans un premier cas 24, l'instruction sera une instruction SELECT, la zone mémoire concernée sera la mémoire réservée 20 dont l'adresse est MEM RES, et la donnée sera relative aux caractéristiques d'une instruction, par exemple ALGO. Le microprocesseur 9 de l'interface 4 reçoit ce message 24 et transmet respectivement sur ses bus de commandes 28, d'adresses 29 et de données 30 l'instruction contenue en zone 25, l'adresse contenue en zone 26, et la donnée contenue en zone 27. Cette transmission est effectuée à destination du microprocesseur 14, selon des protocoles connus et par l'intermédiaire du lecteur 12 et du connecteur 18. Le microprocesseur 14 exécute alors l'instruction, SELECT pour le message 24, ou UPDATE pour un message 31, en commençant par le chargement de cette instruction dans son registre instruction 32. L'instruction concernée est ensuite effectuée par le microprocesseur 14 qui sélectionne, ou met à jour respectivement, la mémoire réservée 20. Dans ce but, l'adresse MEM RES de sélection est transmise par un bus d'adresse 33 du microprocesseur 14. Une commande résultant de l'exécution de l'instruction SELECT ou UPDATE est appliquée, par un bus de commande 34 à un circuit 35 de gestion de la mémoire 20. Le circuit 35 est tout simplement un circuit de lecture écriture, de manière à lire ou à écrire dans la mémoire 20 à des adresses véhiculées par le bus 33 des données véhiculées par un bus 36 de données. Le bus de données 36 transmet les données reçues du bus 33 Dans le cas du message 31, le microprocesseur 14 fait ,executer par lecircuit 35, une inscription, une écriture dans la mémoire 20 du message ALGO reçu du serveur 1. On remarque à ce niveau que le fait d'écrire dans la mémoire réservée 20 n'à rien de différent par rapport à une écriture dans une autre partie de la mémoire de la puce 2. Ce type de commande est trivial. L'automatisme de l'invention a alors pour objet de transmettre, le registre d'instruction 32 du microprocesseur 14, l'instruction différente dont on vient ainsi de stocker les caractéristiques en mémoire réservée 20.

En pratique dans une versiora preférée, on a stocké dans la mémoire 20 non pas l'instruction elle-même mais une adresse d'instruction dans le jeu complémentaire 23. Aussi, après l'inscription des caractéristiques, de l'adresse, de l'instruction complémentaire désignée ALGO, on utilise le contenu de la mémoire 20 pour servir d'adresse et pour pointer une des instructions de la mémoire programme 23. Autrement dit, dans l'automatisme prefére le microprocesseur 14 lit la mémoire 20 et transmet la donnée lue sur son bus d'adresse 33. Cette adresse vient pointer une zone mémoire de la mémoire programme 23. Une fois ce pointage effectué, le microprocesseur lit alors, dans la zone mémoire pointée, la donnée qui y est stockée. Cette donnée est en fait, l'instruction différente. Le microprocesseur la transmet alors par son bus de commande 34 à son registre d'instruction 32. Le microprogramme de l'automatisme se termine par une exécution de l'instruction différente ainsi chargée.

Cette instruction différente peut avoir pour objet de modifier le contenu d'une mémoire annexé 21 de la puce 2. Elle peut également être transmise, en sens inverse, au microprocesseur 9 et être appliquée à l'interface 4, pour un affichage sur l'écran 13 ou autre. Elle peut également être mise en oeuvre directemetent, par le microprocesseur 14, sur le contenu de certaines mémoires ou périphériques de l'interface 4. Cependant, compte-tenu des choix préférés de protocole respectivement série et parallèle, pour une carte à puce 3 et une interface 4, on préférera déléguer au microprocesseur 9, la mise en oeuvre de l'instruction différente. Celle-ci est alors chargée dans un registre d'instructions du microprocesseur 9, de la même façon que pour le microprocesseur 14.

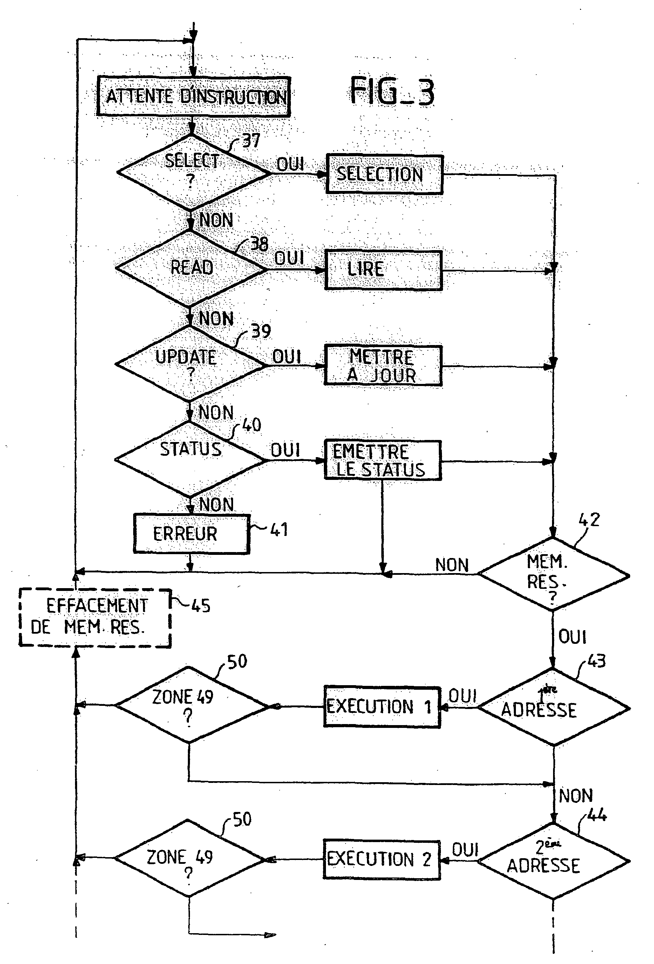

La figure 3 montre un fonctionnement, préféré d'un microprogramme préenregistré dans une mémoire programme 16 d'une carte à puce susceptible de mettre en oeuvre le système de communication de l'invention. Au début de ce microprogramme, le microprocesseur 14 est en attente de réception d'instruction. Puis il reçoit transmis par le bus 28 une instruction. Dans une premier temps, il vérifie que cette instruction est une instruction de sélection au cours d'une étape 37. Si c'est le cas, il exécute la sélection de la zone mémoire, mémoire 20 ou mémoire 21 désignée. Si ce n'est pas le cas, au cours d'une étape 38 le microprocesseur teste si l'instruction est une instruction de lecteur READ. Si c'est le cas il provoque la lecture de la zone mémoire dont l'adresse est convenue dans la partie 26 du message. Si ce n'est pas le cas, dans une etape 39, il regarde s'il s'agit d'une instruction de mise à jour, et le cas échéant il met à jour la zone mémoire concernée. Enfin, normalement il n'y a plus de test à prévoir, et l'instruction restante devrait être une instruction STATUS puisque ce sont à priori les seules instructions du jeu limité d'instructions que le microprocesseur est susceptible d'attendre.

On remarque qu'on un jeu limité plus important ou éventuellement moins important. Seules les instructions SELECT et UPDATE, sont véritablement indispensables pour le procédé de l'invention. Aussi, dans une étape 40 le microprocesseur 14 va vérifier que l'instruction reçue est une demande d'établissement d'un STATUS et le cas échéant il l'exécute. Il est à remarquer que l'instruction STATUS pourra être une instruction normalisée, et ne pas porter à priori de désignation de zone mémoire en zone 26 du message.

Par contre, si le microprocesseur 14 n'a pas détecté au cours des tests 37 à 40 qu'une instruction attendue était reconnue, il délivre en une opération 41, un message d'erreur (affichable, par exemple sur l'ecran 13, mais pas nécessairement). Au cours d'une opération 42 successive à l'exécution de chacune des instructions SELECT READ UPDATE, et éventuellement STATUS, le microprocesseur 14 cherche à savoir si l'adresse contenue dans la partie 26 du message était une adresse MEM RES de la mémoire réservée. Si ce n'est pas le cas, microprocesseur 14 considère que le traitement du message a été effectué, complètement. Il se remet en attente. En ce qui concerne l'instruction STATUS, on pourra prévoir un retour systématique en attente d'instructions du microprocesseur 14, ou bien un passage par le test 42 si la zone 26 du message a été renseigné.

Dans le cas, où la zone 20 de la mémoire réservée est concernée, le microprocesseur 14 charge sur le bus d'adresse 33 le contenu de cette mémoire. Le bus d'adresse 33 pointe alors sur une parmi plusieurs adresses de la mémoire complémentaire 23: Selon qu'il pointe sur la première, la deuxième, ou une autre adresse de la mémoire 23, avec une batterie de test 43, 44 en cascade, on peut provoquer la sélection dans la mémoire 23 d'une parmi plusieurs instructions. Les instructions sont à stocker dans le registre de commande 32 du microprocesseur 14. De préférence, la mémoire 23 sera une mémoire de type non volatile avec des cellules mémoires comportant des transistors à grille flottante, de préférence de type électriquement inscriptible et effaçable : EEPROM. Dans ce cas, après, avoir fait exécuter par le microprocesseur, 14 l'instruction complémentaire, on provoque l'effacement de la mémoire réservée de manière à ce que celle-ci sont à nouveau vierge. L'étape d'éffacement 45 est donc ainsi effectuée après l'exécution de l'instruction complémentaire.

On peut cependant agir différemment. On peut prévoir, par exemple, que l'instruction de mise à jour, UPDATE, exécutée par le microprocesseur 14 (pas par le microprocesseur 9) comporte elle-même un microprogramme consistant à effacer au préalable la mémoire réservée 20 avant l'inscription d'un nouveau pointeur en vue d'exécuter une autre instruction complémentaire. Ceci est utile lorsqu'il faut provoquer le décomptage d'unité dans la zone mémoire 21 de la carte à puce 3. En effet, dans ce cas le serveur 1 envoie la première fois une instruction UPDATE en visant le pointage d'une instruction de décomptage des unités dans la zone complémentaire 23. Par, la suite,il lui suffit de sélectionner la mémoire réservée pour faire exécuter automatiquement le décomptage d'unités. En effet l'instruction de décomptage est déjà inscrite dans la mémoire 20, il n'est pas nécessaire de la réécrire. Il suffit de la sélectionner, de la lire, et de passer par l'étape 42. Au besoin l'instruction STATUS peut même être utilisée. Le message 31 comporte, à la différence du message 24 des données en zone 27 plus conséquentes. Ces données, visent elles aussi la mémoire réservée elles peuvent être stockées dans différentes zone mémoires 46 ou 47 de la mémoire réservée. Dans ce cas, une première partie du contenu du message en zone 27 sera stockée dans une première zone 46 de la mémoire 20, une seconde partie dans une zone 47 successive et ainsi de suite. Ceci signifie que plutôt que d'envoyer au fur et à mesure toutes les instructions pour les faire exécuter par le microprocesseur 14, le serveur 1 envoie un seul message comportant une suite d'instructions devant être exécutées en séquence.

Dans ce cas, à titre d'example, la mémoire 20 comportera dans chaque zone un champ 48 où seront stockés les pointeurs ou caractéristiques des instructions à exécuter, et un champ 49 qui sera par exemple un bit, ou un autre système, dans lequel une information binaire permettra de savoir qu'après l'exécution d'une instruction du jeu complémentaire, par la présence d'un un, devra suivre l'exécution d'une autre instruction du jeu complémentaire. Par contre, par la présence d'un zéro, on saura qu'il n'y a plus d'autres instructions à exécuter ensuite. Dans ce but, l'exécutibn de chaque instruction du jeu complémentaire comportera, dans le microprogramme de la figure 4, un test 50 au cours duquel on cherchera à savoir si l'exécution d'une instruction complémentaire doit être suivie par une exécution d'une autre instruction complémentaire suivante ou non. Le branchement du microprogramme doit alors être immédiat.

En variante on utilise une procédure existante de gestion de la carte. Par exemple une procédure existante d'authentification de la carte comporte l'envoi par le serveur d'un aléa chiffre à la carte, le déchiffrement par la carte de cet aléa, le cryptage par un algorithme de type DES paramétré par l'aléa déchiffré d'un code secret de la carte, et l'envoi au lecteur pour vérification du code secret crypté. Dans l'invention on réserve un aléa donné, par exemple 0000XXXX, pour d'une part indiquer par les 0000 qu'on n'a pas affaire vraiment à une procédure existante, et d'autre part charger la donnée XXXX dans la mémoire 20. Le reste est l'effectué de la façon décrite ci-dessous. L'avantage d'utiliser une procédure existante se situe dans le fait que les interfaces existantes (nombreuses) sont déjà compatibles avec cette procédure. Il suffit d'insérer le test de la présence des 0000 dans le système d'exploitation des nouvelles cartes fabriquées.

## Revendications

1. Système de communication comportant:
- un centre serveur (1), une puce (2) électronique portée par un support (3) à puce, et une interface (4) de communication entre ce centre serveur, cette puce, et, éventuellement, un utilisateur,
- dans l'interface, un microprocesseur (9) et une mémoire (11) programme munie d'un jeu limité (11) d'instructions ou de procédures de communication avec la puce, et,
- dans la puce, un microprocesseur (14) et une mémoire (15) programme munie également d'un jeu limité (16) correspondant d'instructions ou de procédures, **caractérisé en ce que** le système de communication comporte
- des moyens agencés pour, à partir d'un message émis par le centre serveur, au cours d'une session d'utilisation, sélectionner ou écrire, dans une zone mémoire réservée (20) de la puce, avec les jeux limités d'instructions ou les procédures de l'interface, les caractéristiques d'une instruction différente de celles des jeux limités ou procédures de cette interface, et
- dans la puce un automatisme d'exécution agencé pour, au cours de cette session, exécuter cette instruction différente après sélection ou écriture de ses caractéristiques dans cette zone mémoire réservée.

2. Système selon la revendication 1, **caractérisé en ce que**
- la mémoire programme de la puce comporte un jeu complémentaire d'instructions,
- les caractéristiques écrites .concernent une adresse dans cette mémoire programme de la puce d'une instruction de ce jeu complémentaire.

3. Système selon la revendication 1 ou la revendication 2, **caractérisé en ce que** l'automatisme comporte, en mémoire programme de la puce,
- un microprogramme de test (37-40) de l'appartenance d'une instruction, reçue du serveur ou de l'utilisateur, au jeu d'instructions limité, couplé avec une exécution de cette instruction testée, branché en série avec
- un microprogramme de test (42) de la désignation, dans l'instruction ainsi exécutée, de la zone mémoire réservée, couplé à l'exécution de l'instruction différente.

4. Système selon la revendication 1 ou la revendication 2, **caractérisé en ce que** l'automatisme comporte, en mémoire programme de la puce,
- un microprogramme de test (42) de la désignation de la zone mémoire réservée, couplé à l'exécution de l'instruction différente.

5. Système selon la revendication 3 ou la revendication 4, **caractérisé en ce que** l'automatisme comporte, en mémoire programme de la puce,
- un microprogramme d'exécution d'une instruction du jeu complémentaire dont l'adresse est stockée en zone mémoire réservée.

6. Système selon l'une des revendications 1 à 5, **caractérisé en ce que** la zone mémoire réservée de la puce est non volatile, notamment du type EEPROM.

7. Système selon l'une des revendications 1 à 6 **caractérisé en ce que** la zone mémoire réservée comporte un champ (49) pour stocker une information permettant de savoir qu'après l'éxécution d'une instruction différente de celles des jeux limités ou procédures devra suivre l'éxécution d'une autre instruction différente et **en ce que** l'automatisme d'exécution comporte un test (50) de la valeur de ce champ.

8. Système selon l'une des revendications 1 à 7 **caractérisé en ce que** le microprocesseur de l'interface est agencé pour exécuter l'instruction différente.

## Claims

1. A communication system comprising:
- a server centre (1), an electronic chip (2) carried by a chip support (3) and an interface (4) for communication between this server centre, this chip and possibly a user,
- in the interface, a microprocessor (9) and a program memory (11) provided with a limited set (11) of instructions or procedures for communication with the chip, and
- in the chip, a microprocessor (14) and a program memory (15) also provided with a corresponding limited set (16) of instructions or procedures, **characterised in that** the communication system comprises
- means arranged so as, from a message sent by the server centre, during a utilisation session, to select or write, in a reserved memory area (20) of the chip, with the limited sets of instructions or procedures of the interface, the characteristics of an instruction different from those of the limited sets or procedures of this interface, and
- in the chip an automatic execution controller arranged so as, during this session, to execute this different instruction after the selection or writing of its characteristics in this reserved memory area.

2. A system according to claim 1, **characterised in that**
- the program memory of the chip comprises a complementary set of instructions,
- the written characteristics concern an address, in this program memory of the chip, of an instruction of this complementary set.

3. A system according to claim 1 or 2, **characterised in that** the automatic controller comprises, in the program memory of the chip,
- a microprogram (37-40) for testing whether an instruction, received from the server or user, belongs to the limited set of instructions, coupled with an execution of this tested instruction, connected in series with
- a microprogram (42) for testing the designation, in the instruction thus executed, of the reserved memory area, coupled with the execution of the different instruction.

4. A system according to claim 1 or claim 2, **characterised in that** the automatic controller comprises, in the program memory of the chip,
- a microprogram (42) for testing the designation of the reserved memory area, coupled with the execution of the different instruction.

5. A system according to claim 3 or claim 4, **characterised in that** the automatic controller comprises, in the program memory of the chip,
- a microprogram for executing an instruction of the complementary set whose address is stored in the reserved memory area.

6. A system according to one of claims 1 to 5, **characterised in that** the reserved memory area of the chip is non-volatile, in particular of the EEPROM type.

7. A system according to one of claims 1 to 6, **characterised in that** the reserved memory area comprises a field (49) for storing information making it possible to know that, after the execution of an instruction different from those in the limited sets or procedures, the execution of another different instruction should follow, and **in that** the automatic execution controller comprises a test (50) for the value of this field.

8. A system according to one of claims 1 to 7, **characterised in that** the microprocessor of the interface is arranged so as to execute the different instruction.

## Patentansprüche

1. Kommunikationssystem mit:
- einem Servercenter (1), einem von einem Chipträger (3) getragenen elektronischen Chip (2) und einer Kommunikationsschnittstelle (4) zwischen diesem Servercenter, diesem Chip und eventuell einem Anwender,
- einem Mikroprozessor (9) und einem mit einem begrenzten Anweisungssatz (11) oder Kommunikationsverfahrenssatz mit dem Chip ausgerüstetes Speicherprogramm (11) in der Schnittstelle und
- einem Mikroprozessor (14) und einem ebenfalls entsprechenden begrenzten Anweisungs- oder Verfahrenssatz (16) ausgerüsteten Speicherprogramm (15) im Chip, **dadurch gekennzeichnet, dass** das Kommunikationssystem Folgendes umfasst:
- angeordnete Mittel, um ausgehend von einer vom Servercenter ausgegebenen Meldung im Verlauf einer Anwendungssitzung in einem reservierten Speicherbereich (20) des Chips mit den begrenzten Anweisungssätzen oder den Verfahren der Schnittstelle, die Merkmale einer von den begrenzten Sätzen oder Verfahren dieser Schnittstelle unterschiedlichen Anweisung auszuwählen oder zu schreiben und
- ein zur Ausführung im Verlauf dieser Sitzung dieser unterschiedlichen Anweisungen nach der Wahl oder dem Schreiben seiner Merkmale in diesem reservierten Speicherbereich angeordneter Ausführungsmechanismus im Chip.

2. System gemäß Anspruch 1, **dadurch gekennzeichnet, dass**
- der Programmspeicher des Chips einen komplementären Anweisungssatz umfasst,
- die geschriebenen Merkmale eine Adresse in diesem Programmspeicher des Chips einer Anweisung dieses komplementären Satzes betreffen.

3. System gemäß Anspruch 1 oder Anspruch 2, **dadurch gekennzeichnet, dass** der Automatismus im Programmspeicher des Chips Folgendes umfasst:
- ein Testmikroprogramm (37- 40) der Zugehörigkeit einer vom Server oder vom Anwender empfangenen Anweisung für den begrenzten Anweisungssatz, gekoppelt mit einer Ausführung dieser getesteten Anweisung, in Serie geschaltet mit
- einem Testmikroprogramm (42) der Bezeichnung in der somit ausgeführten Anweisung des reservierten Speicherbereichs, gekoppelt mit der Ausführung der unterschiedlichen Anweisung.

4. System gemäß Anspruch 1 oder Anspruch 2, **dadurch gekennzeichnet, dass** der Automatismus im Speicherprogramm des Chips Folgendes umfasst:
- einen Testmikroprozessor (42) der Bezeichnung des reservierten Speicherbereichs, gekoppelt mit der Ausführung der unterschiedlichen Anweisung.

5. System gemäß Anspruch 3 oder Anspruch 4, **dadurch gekennzeichnet, dass** der Automatismus im Speicherprogramm des Chips Folgendes umfasst:
- ein Ausführungsmikroprogramm einer Anweisung des komplementären Satzes, dessen Adresse im reservierten Speicherbereich gespeichert ist.

6. System gemäß Anspruch 1 bis 5, **dadurch gekennzeichnet, dass** der reservierte Speicherbereich des Chips nicht flüchtig ist, insbesondere vom Typ EEPROM.

7. System gemäß Anspruch 1 bis 6, **dadurch gekennzeichnet, dass** der reservierte Speicherbereich ein Feld (49) zum Speichern einer Information umfasst, die es erlaubt, festzustellen, dass nach der Ausführung einer von denen der begrenzten Sätze oder Verfahren unterschiedlichen Anweisung, die Ausführung einer anderen unterschiedlichen Anweisung zu folgen hat, und dass der Ausführungsautomatismus einen Test (50) des Wertes dieses Feldes umfasst.

8. System gemäß Anspruch 1 bis 7, **dadurch gekennzeichnet, dass** der Mikroprozessor der Schnittstelle zur Ausführung der unterschiedlichen Anweisung angeordnet ist.
